# EUROPEAN PATENT SPECIFICATION

(11) **EP 2 802 028 B1**
(45) Date of publication and mention of the grant of the patent: **25.10.2017**
(21) Application number: 14167635.3
(22) Date of filing: 09.05.2014
(51) Int. Cl.: H01M 2/36, H01M 10/12

(54) **Plant for the electrochemical formation of batteries and device for supplying an electrolyte solution to a cell of a battery for said plant**
Einrichtung zur elektrochemischen Herstellung von Batterien und Vorrichtung zur Lieferung einer Elektrolytlösung zu einer Zelle einer Batterie für diese Anlage
Installation pour la formation électrochimique de batteries et dispositif pour alimenter une solution d'électrolyte pour une cellule d'une batterie de ladite installation

(30) Priority: 10.05.2013 IT PD20130127
(43) Date of publication of application: 12.11.2014
(73) Proprietor: SOVEMA GROUP S.P.A., 37069 Villafranca (VR) (IT)
(72) Inventor: Farina, Pietro, 37069 Villafranca (VR) (IT); Iasevoli, Paolo, 37069 Villafranca (VR) (IT)
(74) Representative: Gallo, Luca

(56) References cited:
- EP-A1- 2 133 940
- DE-B3-102008 029 783
- GB-A- 376 161
- US-A- 5 803 138
- US-A1- 2009 314 383
- US-A1- 2010 205 801

## Description

### Field of application

The present invention regards a plant for the electrochemical formation of batteries and a device for supplying an electrolyte solution to a cell of a battery for such plant, according to the preamble of the respective independent claims.

The present plant and the device were in particular designed for the production of lead-acid batteries, preferably for industrial vehicles such as trucks. More in detail, the plant and the device in accordance with the invention are adapted to be employed for the electrochemical formation with recirculation of such batteries.

The plant and the device according to the present invention are therefore inserted in the industrial field of production of batteries and, in particular, of lead-acid batteries.

### State of the art

As is known, lead batteries generally comprise a container made of plastic material provided with a cover and a plurality of lead plates or grids, supporting the active material that participates in the electrochemical reactions (lead, lead sulfate etc.), arranged inside the container, organized in a plurality of cells, and immersed in an electrolyte solution usually constituted by a concentrated aqueous acidic solution, such as in particular sulfuric acid (electrolyte). The positive and negative plates are electrically connected to each other in order to make the electrodes and are electrically divided by separators adapted to isolate the electrodes from each other, allowing the free circulation of the electrolyte. The cover of the plastic container of the battery is provided with a plurality of openings, each of which communicating with the interior of a corresponding cell, in order to allow the introduction of the electrolyte solution into the latter and its drawing therefrom.

The number of cells arranged in each battery and, consequently, the number of openings provided on the cover of the battery depend on the quantity of energy that the battery must deliver, i.e. the use destination of the battery. The batteries for vehicles, such as in particular the batteries for trucks, generally comprise six cells.

At the time of their production, the plates are inert or inactive and are transformed into active state by means of a process of electrochemical formation, which requires feeding with direct current the electrodes of the cells which compose the batteries, causing the charging thereof up to expected voltage and current intensity values, so as to make them ready for sale and use.

During such process of electrochemical formation of the plates, there is an increase of the temperature of the electrodes and the electrolyte solution both due to the exothermal chemical reactions that take place during charging, and due to the ohmic effect due to the passage of the direct current.

The increase of the temperature during the electrochemical formation process can damage the active material set on the plates themselves and is generally controlled by means of the use of currents with lesser intensity. Nevertheless, this involves slowing down the battery formation process.

For such purpose, processes and plants are known which allow controlling the temperature inside the batteries during their electrochemical formation, in order to prevent that the same are overheated, preferably maintaining it below 60° C. Such processes and plants make it possible to use high currents, in at least some intervals, and consequently reduce the required charge times.

In particular, a known plant for the electrochemical formation of lead-acid batteries provides that the electrolyte solution contained in the cells of the batteries is made to circulate in an external circuit, in which its temperature characteristics are controlled with a heat exchanger, and preferably also its electrolyte concentration characteristics are controlled.

More in detail, the external circuit for the circulation of the electrolyte solution comprises means for feeding the cells of the batteries with a flow of electrolyte solution at a controlled piezometric pressure, and return means for drawing the aforesaid flow of electrolyte solution from the cells so as to generate a continuous circulation of solution at their interior.

For such purpose, the plant comprises a plurality of devices for supplying the electrolyte solution to respective cells of the batteries, each of which adapted to be removably and sealingly inserted in one of the openings of the cover of the battery in order to allow the introduction of the electrolyte solution into the corresponding cell, as well as the drawing of the solution itself from the cell.

Each supply device is provided with an inlet duct, through which the electrolyte solution is introduced into the cell, and with an outlet duct, through which the electrolyte solution is extracted from the cell. The inlet and outlet ducts of the supply device are connected by means of first and second tubes of connection respectively to the manifold for the distribution of the electrolyte solution which receives the solution from a delivery duct, and to the manifold for the collection of the electrolyte solution, which sends it to a return duct. During the process of charging the batteries, time intervals are provided in which the electrical power supply is carried out with high currents and hence the electrolyte solution is made to flow into the cells, being heated, and into the external circuit, being cooled.

The process of electrochemical formation of each battery therefore requires that a number of devices for supplying the electrolyte solution equivalent to the number of cells comprised in the battery is sealingly inserted in the respective openings on the cover of the battery. After the battery has been charged, the supply devices must be removed and substituted with caps intended to remain on the battery to close the aforesaid openings.

In particular, the walls that delimit each opening on the covers of truck batteries are generally provided with a thread and the caps intended to be used to close such openings are counter-threaded in order to be screwed into the respective openings.

The supply devices conventionally used in the plants for the electrochemical formation of truck batteries each comprise an externally-threaded ring nut, adapted to be screwed into one of the openings on the cover of a battery and provided with a central through hole in which a seal is circumferentially housed. The supply device also comprises a tubular body, provided with an inlet duct and with an outlet duct for the passage of the electrolyte solution and susceptible to be sealingly inserted in the through hole of the ring nut.

After the battery has been charged, each of the tubular bodies is extracted from the corresponding ring nut, the latter unscrewed and removed from the opening on the cover of the battery and a cap is screwed in such opening to close the latter.

The supply devices conventionally used for the electrochemical formation of truck batteries described briefly above, as well as the plants that make use of the aforesaid devices, have however in practice proven that they do not lack drawbacks.

First of all, the positioning of such devices in the corresponding openings results particularly complex and requires long labor times, since it is first of all necessary to screw the ring nut and then insert the tubular body in engagement in the through hole of the ring nut. Each of such operations must be executed a number of times equal to the number of openings provided on the cover of the battery, i.e. for example six times in the case in which the process of electrochemical formation is for truck batteries. Also the subsequent removal of the devices, at the end of the charging, results rather long and complex, given that it is necessary to remove the tubular body from the ring nut and unscrew and remove the latter from the cover of the battery in order to be able to then position, via screwing, the closure cap in the corresponding opening.

In addition, given that the size and in particular the depth of the thread obtained at the openings on the cover of the truck batteries can vary as a function of the battery model, the above-described supply devices are not adapted to be employed for the electrochemical formation of different battery models, given that they require ring nuts having dedicated shape and size characteristics, as well as threads, i.e. adapted to be engaged for screwing in openings having specific size and counter-thread.

In order to reduce the labor times required for its positioning in the opening of a battery and for its removal from the same opening, a supply device has been designed in which the ring nut bears the tubular body already mounted, inserted in its through hole. The ring nut is free to rotate with respect to the tubular body.

The supply devices thus obtained can be more quickly positioned in the corresponding openings on the cover of a battery, given that the operation of insertion of the tubular body in the through hole of the ring nut is not required. Also the removal of the supply devices, after charging, is quicker, given that usually it is only necessary to unscrew the ring nut and remove the assembly constituted by the ring nut and by the tubular body from the corresponding opening.

Nevertheless, the screwing and unscrewing of the ring nut are rather complex due to the presence of the tubular body inserted in its through hole.

In addition, also the latter known device is not adapted to be used for the electrochemical formation of any truck battery model, for the same reasons reported above for the preceding described known device.

A different supply device designed for reducing the required labor times, in particular for the removal of the device itself from the cover of the battery and for the positioning on the opening of a cap intended to remain on the battery to close the same, comprises an externally threaded ring nut provided with a through hole and a tubular body, separate from the ring nut, and susceptible to be sealingly inserted in the through hole of the ring nut. Unlike the known devices described above, the ring nut of the present supply device is intended to remain on the cover of the battery at the end of the charging and to receive a blind element in its through hole. The latter is inserted under pressure in the through hole of the ring nut and is provided with a seal adapted to secure the sealing together with the seal arranged on the ring nut. The blind element and the ring nut are thus jointly adapted to define the cap intended to remain on the cover of the battery to close one of the openings.

Such device therefore allows reducing the labor times required for the removal of the device itself from the cover of the battery and for the positioning of the closure cap, given that it is not necessary for the ring nut to be unscrewed and removed from the corresponding opening, nor does the cap have to be screwed into the opening from which the ring nut was removed; rather, it is sufficient to insert a blind element under pressure into the through hole of the ring nut.

Also the latter known supply device and the plant employing such device have nevertheless proven that in practice they do not lack drawbacks.

First of all, also the latter device, like the preceding devices, is not adapted to be used for the electrochemical formation of any truck battery model, for the same reasons reported above for the preceding described devices of known type.

In addition, the use of such device is not very convenient economically, since each of the ring nuts employed remains on the cover of the battery at the end of the charging.

Document EP 2133940 discloses a device for supplying the electrolytic solution to the cells of a battery, the device comprising an internal tubular body, and an external tubular body which is arranged around the internal tubular body and is provided, on its lower part, with bayonet-type reliefs for the double-bayonet engagement with the corresponding opening of the battery. Furthermore, the external tubular body is provided, on its upper part, with a locking ring, beneath which an annular gasket is arranged, intended to seal against the edge of the cover opening of the battery.

The known supplying device disclosed in document EP 2133940 is not adapted to be used for the electrochemical formation of any battery model, because the opening of the cover of the battery need to be provided with a bayonet engagement for coupling with the bayonet-type reliefs of the external tubular body of the supplying device.

Document US 2010/205801 discloses a plant for the electrochemical formation of batteries, such plant being provided with a plurality of supplying devices for supplying the electrolytic solution to the cells of the batteries. Each supplying device comprises a tubular body inserted in an opening of the cover of the corresponding battery, and a deformable sealing element arranged on the tubular body in such a manner to make a seal between the tubular body and the cover of the battery.

The known supplying devices disclosed in document US 2010/205801 are not provided with sealing mechanisms able to allow a simple and fast positioning and removal of the supply device.

Document DE 102008029783 discloses a cap for a bottle provided with a sealing mechanism for coupling the cap to the mouth of the bottle in a sealing engagement.

Such a cap does not belong to the field of plants for the electrochemical formation of batteries and is not suitable for supplying an electrolyte solution to a cell of a battery.

### Presentation of the invention

The problem underlying the present invention is therefore that of overcoming the drawbacks manifested by the plants of known type, by providing a plant for the electrochemical formation of batteries which allows reducing the labor times required for the positioning and removal of the supply devices for the electrochemical formation of the cells of such batteries.

Another object of the present invention is to provide a plant for the electrochemical formation of batteries, which allows obtaining the electrochemical formation of the cells of the batteries in a substantially safe manner.

Further object of the present invention is to provide a device for supplying an electrolyte solution to a cell of a battery for a plant for the electrochemical formation of batteries, which is structurally inexpensive to achieve and entirely reliable in operation.

Another object of the present invention is to provide a device for supplying an electrolyte solution to a cell of a battery, which can be used for the electrochemical formation of different battery models, and in particular different truck battery models, in any case ensuring an optimal sealing.

Another object of the present invention is to provide a device for supplying an electrolyte solution to a cell of a battery, which is easy and quick to insert in the opening of the cover of a battery and easy and quick to remove from such opening.

Another object of the present invention is to provide a device for supplying an electrolyte solution to a cell of a battery, which involves easy maintenance.

These and still other objects are all achieved by the plant and by the supply device according to the present invention.

### Brief description of the drawings

The technical characteristics of the finding, according to the aforesaid objects, can be clearly seen in the contents of the below-reported claims, and the advantages thereof will be more evident in the following detailed description, made with reference to the enclosed drawings, which represent several merely exemplifying and non-limiting embodiments of the invention, in which:
Fig. 1 shows a diagram of the plant for the electrochemical formation of batteries, object of the present invention, in one possible embodiment thereof;
Figs. 2 and 2A respectively show an embodiment of a cover of a truck battery provided with a plurality of openings and an enlarged detail of such cover, relative to one of the aforesaid openings;
Fig. 3 shows a perspective view of a detail of the plant of figure 1, relative to a device for supplying an electrolyte solution to a cell of a battery according to the present invention;
Fig. 4 shows a side view of the supply device of figure 3;

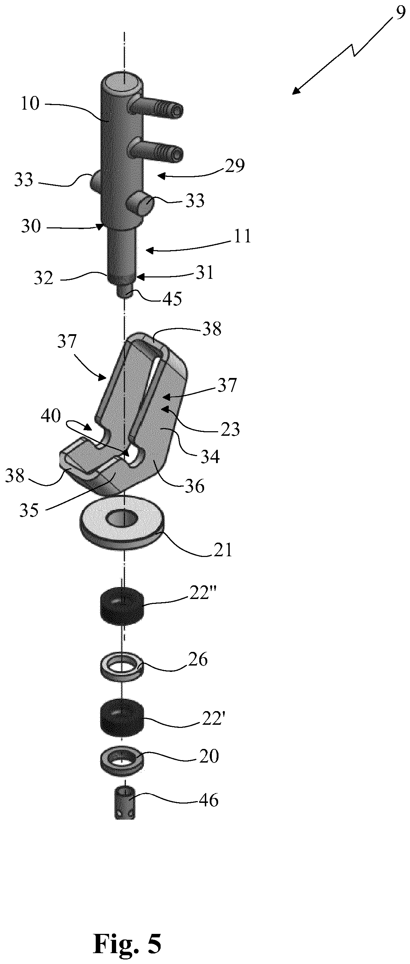

Fig. 5 shows an exploded view of the supply device of figure 3;
Fig. 6 shows a section view of a first detail of the supply device of figure 3, relative to a provided tubular body thereof, carried out along the line VI-VI of Figure 4;

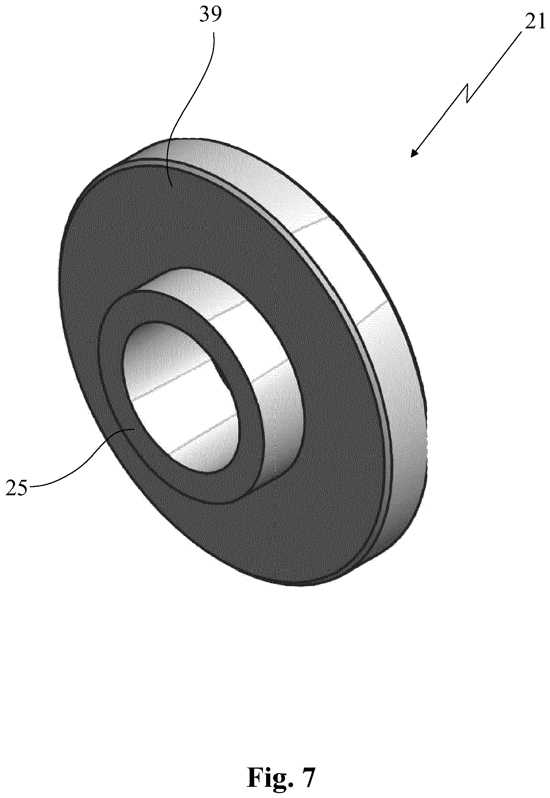

Fig. 7 shows a perspective view of a second detail of the supply device of figure 3, relative to a provided pressure element;

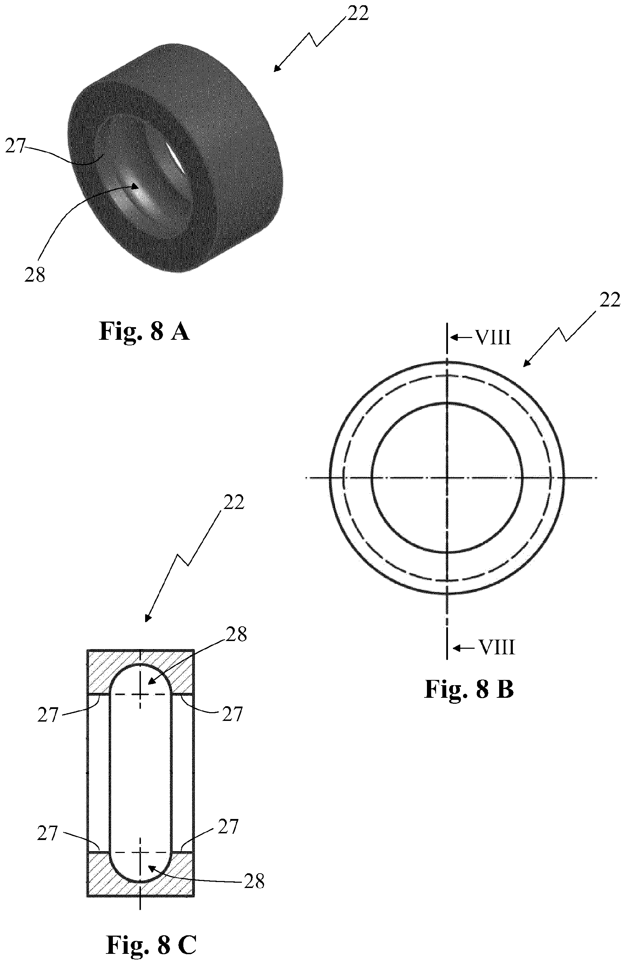

Figs. 8A, 8B and 8C respectively show a perspective view, a side view and a section view carried out along the line of Figure 8B of a third detail of the supply device of figure 3, relative to a sealing element;

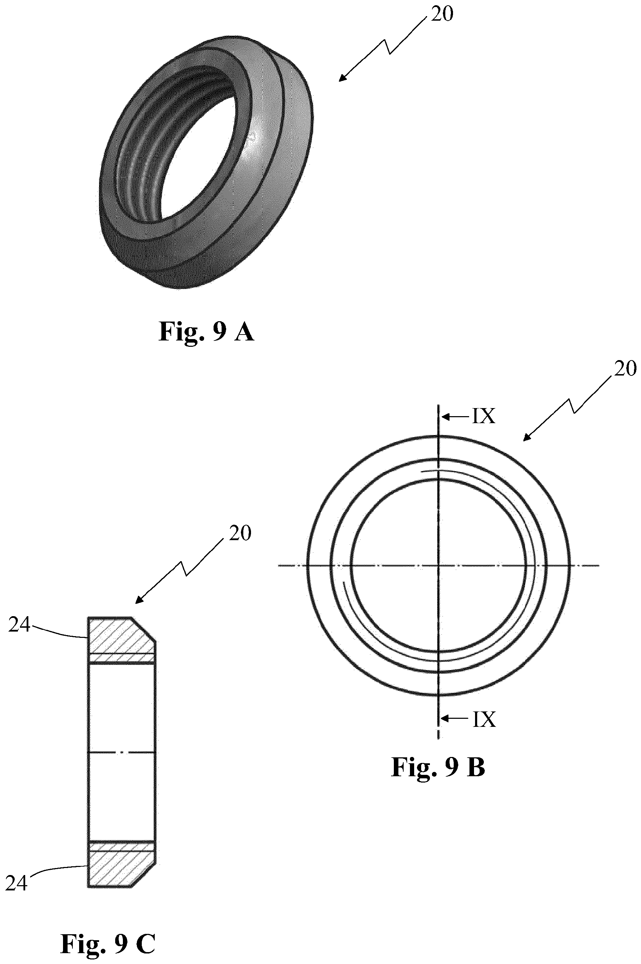

Figs. 9A, 9B and 9C respectively show a perspective view, a side view and a section view carried out along the line IX-IX of Figure 9B of a fourth detail of the supply device of figure 3, relative to an abutment element;

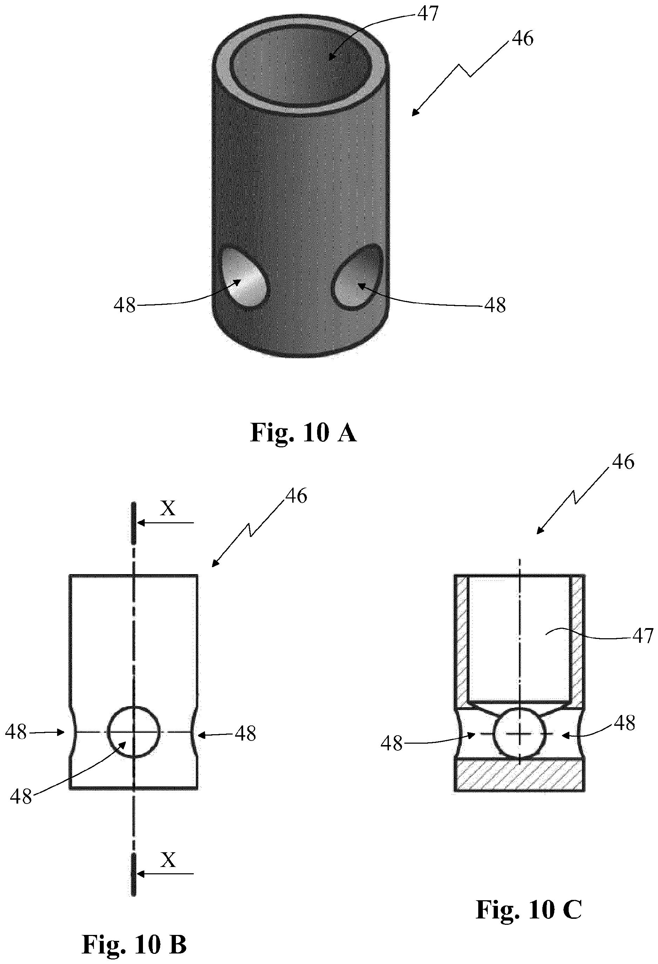

Figs. 10A, 10B and 10C respectively show a perspective view, a side view and a section view, carried out along the line X-X of Figure 10B, of a fifth detail of the supply device of figure 3, relative to a filter.

### Detailed description of a preferred embodiment

With reference to the set of drawings, reference number 1 indicates overall an embodiment of a plant for the electrochemical formation of batteries, object of the present invention.

In accordance with the enclosed figures, a plurality of batteries 2, in particular of batteries for industrial vehicles such as truck batteries, is positioned above a bed or a pallet for facilitated transport. Each battery 2 comprises a rigid container in an entirely conventional manner, made of plastic material of box-like shape, which is closed on the upper part by a cover 3 which bears, externally and projectingly fixed, a positive electrode and a negative electrode. Each of such electrodes is also extended within the container in order to be connected to the plates of its relative polarity. The electrodes are connected for the process of electrochemical formation to respective conduction bars of opposite polarity, in turn connected to an electrical energy source that feeds them with direct current, according to pre-established charge programs.

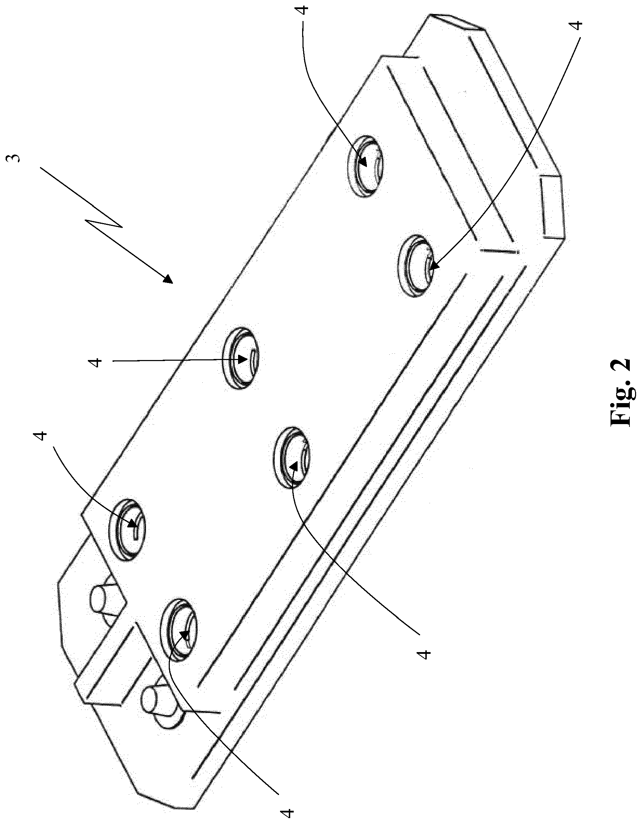

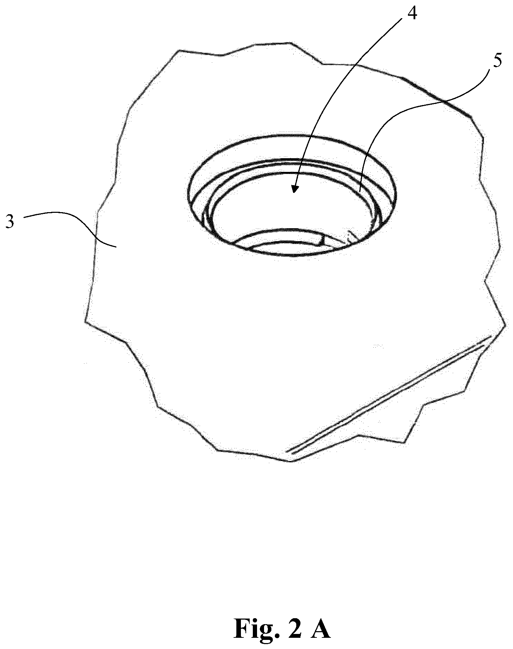

The cover 3 of each of the batteries 2 comprises one or more openings 4, each of which in communication with the interior of a corresponding cell of the battery 2, in order to allow the introduction of the electrolyte solution in the latter and its drawing from the latter. The batteries for vehicles, such as in particular the truck batteries, generally comprise six cells and the covers 3 of their containers therefore comprise the same number of openings 4, as illustrated in Figure 2. As in particular illustrated in Figure 2A, the walls that internally delimit each of the openings 4 on the covers 3 of the truck batteries 2 are usually provided with a thread 5, which has size and depth variable as a function of the battery model 2.

The plant 1 according to the invention comprises a circuit 6, in which an electrolyte solution circulates, which in accordance with the prior art can be obtained, in an entirely conventional manner, mainly with sulfuric acid (electrolyte) in aqueous solution. The circuit 6 is configured for reaching all the batteries 2 that are subjected to the process of electrochemical formation of the plant 1, making an electrolyte solution circulate through them which is suitably cooled and controlled with regard to its electrolyte concentration.

The circuit 6 for the circulation of the electrolyte solution comprises feeding means 7 for feeding the cells of the batteries 2 with a first flow of electrolyte solution at a controlled piezometric pressure.

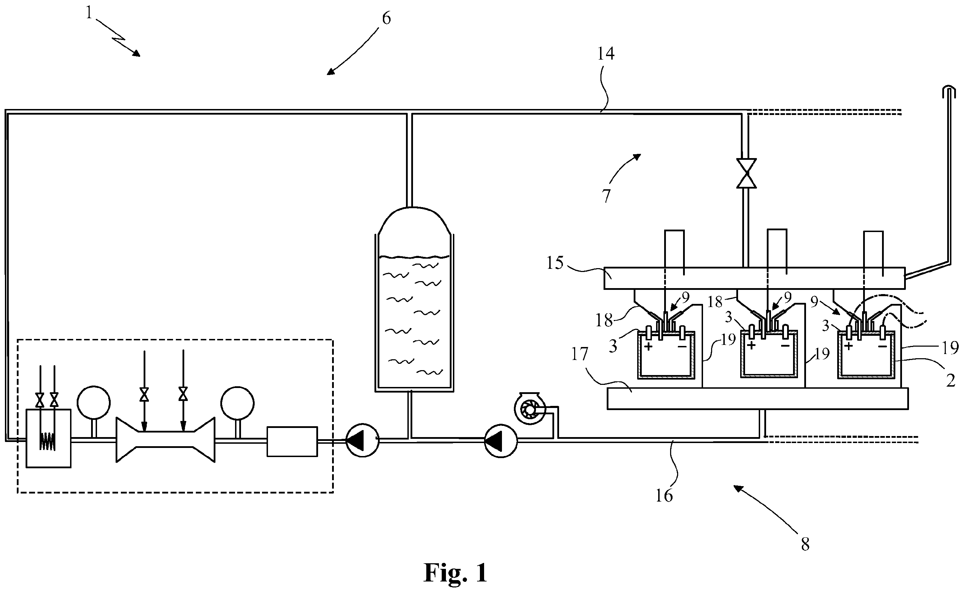

The plant 1 according to the present invention also comprises, as illustrated in Figure 1, return means 8 for drawing, under reduced pressure, the aforesaid first flow of electrolyte solution from the batteries 2 so as to generate a continuous circulation of solution at their interior.

More in detail, the feeding means 7 comprise a delivery tube 14 connected to at least one distribution manifold 15 in order to convey the first flow of electrolyte solution into the elements 2 of the batteries.

In turn, the return means 8 comprise a collection tube 16 connected to at least one suction manifold 17, which is under reduced pressure in order to suck from the elements 2 the first flow of electrolyte solution, which has been introduced into the elements 2 from the distribution manifold 15.

In order to allow the easy introduction and removal of the electrolyte solution into and from the cells, the plant 1 further comprises a plurality of devices 9 for supplying the electrolyte solution to the cells of the batteries 2. Each of the supply devices 9 is susceptible to be removably and sealingly mounted on the cover 3 of one of the batteries 2, at one of the openings 4, and connected to the feeding means 7, in order to receive from the latter a flow of electrolyte solution and convey it into the corresponding cell, and to the return means 8, in order to extract the flow of electrolyte solution from the corresponding cell.

In particular, for the electrochemical forming of a truck battery, six supply devices 9 will be sealingly mounted on the cover 3 of the aforesaid battery, one in each of the six openings 4 obtained on the cover 3 itself.

In accordance with the idea underlying the present invention, each of the supply devices 9 is provided with a tubular body 10, which has preferred extension along a longitudinal direction X and comprising an end portion 11 adapted to be at least partially removably inserted in one of the openings 4 of the cover 3 of a battery 2. More in detail, the tubular body 10 advantageously comprises, in addition to the end portion 11, a grip portion 29, adapted to be handled by an operator in order to insert and remove the end portion 11 into and from the openings 4 on the covers 3 of the batteries 2. According to the embodiment illustrated in the enclosed figures, the end portion 11 of the tubular body 10 is extended from the grip portion 29, in a single body therewith.

Preferably, the grip portion 29 and the end portion 11 of the tubular body 10 have a substantially cylindrical form, as illustrated in the enclosed figures, so as to be respectively easier to handle and easier to insert in a corresponding opening 4 of the cover 3 of a battery 2. In particular, the end portion 11 has a smaller transverse section that that of the grip portion 29 and defines a shoulder 30 with the latter.

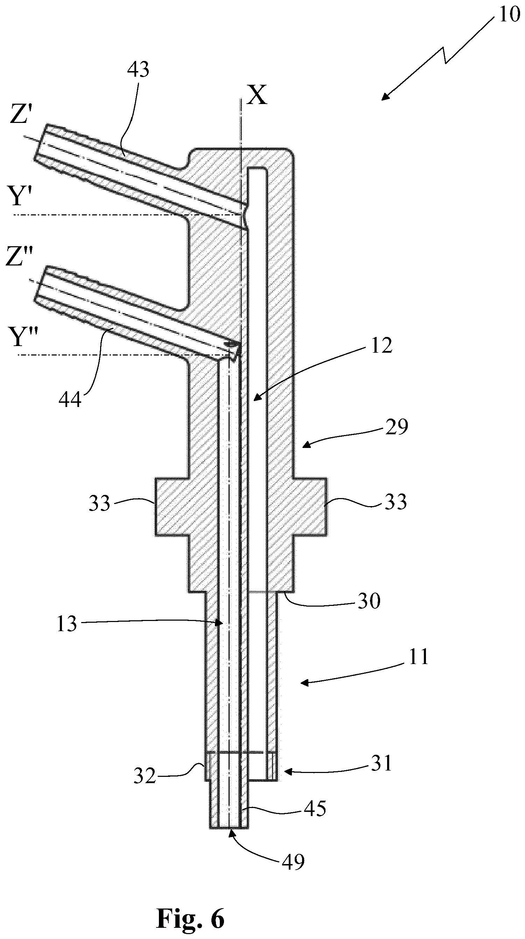

The tubular body 10 also comprises, as illustrated in Figure 6, at least one inlet duct 12 connected to the feeding means 7, in order to receive from the latter the flow of electrolyte solution and convey it into the corresponding cell, and an outlet duct 13 connected to the return means 8, for the extraction of the flow of electrolyte solution from the cell.

More in detail, the inlet duct 12 and the outlet duct 13 of each supply device 9 are connected to the circuit of distribution of the electrolyte solution before starting up the plant 1 as specified hereinbelow.

The inlet duct 12 of the device 9 of each element 2 is connected by means of a first connector 18 to the distribution manifold 15 in order to feed, with the first flow of electrolyte solution, the corresponding elements 2, while the outlet duct 13 is connected with a second connector 19 to the suction manifold 17, in order to extract the first flow of electrolyte solution from the elements 2 themselves, i.e. that flow that entered into the containers of the elements 2 through the inlet duct 12.

Still in accordance with the idea underlying the present invention, each of the supply devices 9 further comprises, mounted on the end portion 11 thereof, an abutment element 20, a pressure element 21 and one or more sealing elements 22, as well as a lever 23 preferably mounted on its grip portion 29, as better described hereinbelow.

The abutment element 20 is fixed to the end portion 11 of the tubular body 10, preferably at the free end 31 of the latter opposite the shoulder 30, and has an annular abutment face 24, which is extended around the end portion 11, with at least one component thereof substantially perpendicular to the longitudinal direction X. In particular the annular abutment face 24 is substantially extended in radial direction around the end portion 11 of the tubular body 10.

Advantageously, at the free end 31 thereof, the end portion 11 of the tubular body 10 is provided with a threaded terminal section 32 and the abutment element 20 is defined by a ring nut susceptible to be screwed on such threaded terminal section 32.

The pressure element 21 is mounted on the end portion 11 of the tubular body 10 and has an annular pressure face 25, which faces the abutment face 24 of the abutment element 20 and is extended around the end portion 11, it too with at least one component thereof substantially perpendicular to the longitudinal direction X of preferred extension of the tubular body 10. More in detail, the pressure element 21 is circumferentially mounted on the end portion 11, in particular in abutment against the shoulder 30 at least in one position thereof, and its annular pressure face 25 is radially extended around the end portion 11 of the tubular body 10.

Each of the elastically deformable sealing elements 22 are perimetrically mounted on the end portion 11 of the tubular body 10, interposed between the annular abutment face 24 and the annular pressure face 25.

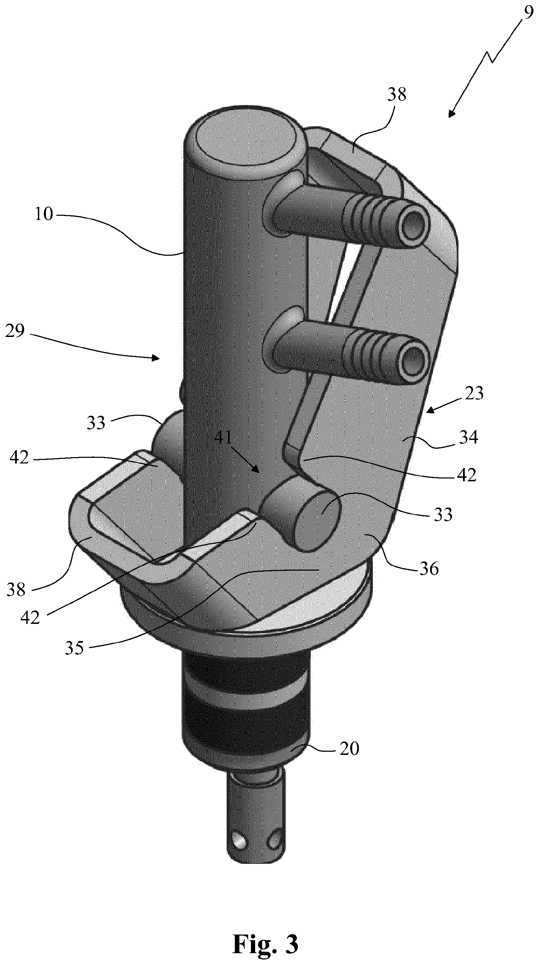

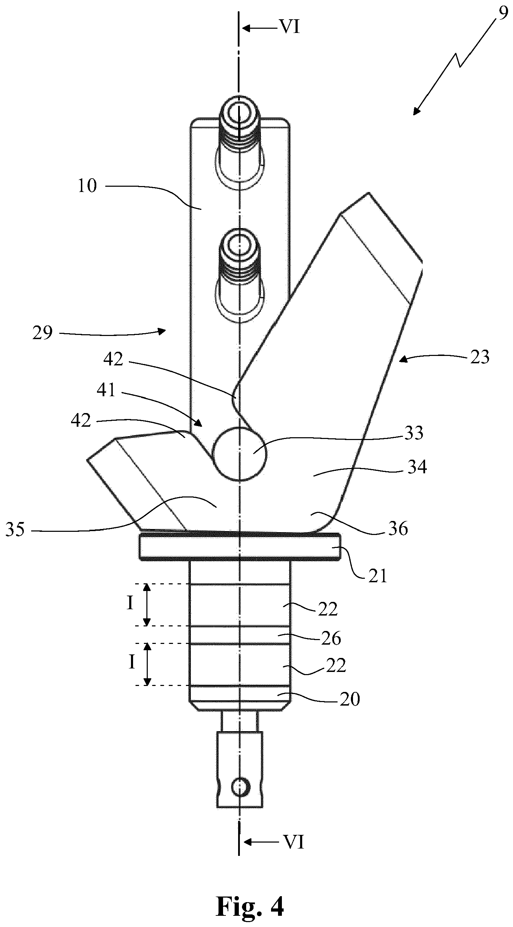

The pressure element 21 is movable with respect to the tubular body 10 along the longitudinal direction X between a compression position, in which it is brought close to the abutment element 20 and causes the compression of the sealing element 22 along the longitudinal direction X and its perimeter expansion via elastic deformation, and a rest position, illustrated in Figures 3 and 4, in which it is spaced from the abutment element 20 and, advantageously, is in abutment against the shoulder 30 of the tubular body 10. The pressure element 21 is moved between the rest position and the compression position by means of the lever 23, which is constrained to the tubular body 10 and in particular is manually actuatable.

The sealing element 22, elastically deformed due to the action of the pressure element 21 arranged in compression position, is susceptible to obtain a sealing between the tubular body 10 and the cover 3 of one of the batteries when the end portion 11 of the tubular body 10 is inserted in the opening 4 of the cover 3.

More in detail, the sealing element 22 mounted on the tubular body 10 is extended for a section I of the end portion 11 of the latter along the longitudinal extension direction X, when the pressure element 21 is situated in the rest position.

In operation, when the lever 23 is actuated for moving the pressure element 21 from the rest position to the compression position, the approaching of the pressure element 21 to the abutment element 20, i.e. its moving away from the shoulder 30, reduces the section of the end portion 11 occupied by the sealing element 22, causing the compression of the latter and its elastic deformation. In particular, the sealing element 22 is forced to be perimetrically expanded. When the end portion 11 of the supply device 9 is inserted in an opening 4 of the cover 3 of a battery 2, the perimeter expansion of the sealing element 22 ensures that the latter adheres to the walls that internally delimit the opening 4 itself, ensuring an optimal seal between the supply device 9 and the cover 3.

The supply device 9 for the plant according to the present invention is therefore adapted to be used for the electrochemical formation of different models of batteries and, in particular, different models of truck batteries such as, as previously specified, they can have different size and in particular different depth of the thread 5 obtained at the openings 4 on their cover 3. The sealing element 22 arranged on the supply device 9 is indeed able to obtain a seal on the cover 3, independent of the size and depth of the thread provided on the walls that internally delimit the openings 4 of the cover 3.

In accordance with a preferred embodiment thereof illustrated in the enclosed figures, the supply device 9 for plants according to the present invention comprises two sealing elements 22', 22" mounted on the end portion 11 of the tubular body 10 and further comprises a spacer element 26 mounted on the end portion 11 of the tubular body 10 interposed between the two sealing elements 22', 22" and movable with respect to the tubular body 10 along the longitudinal direction X.

Due to the fact that the spacer element 26 interposed between the sealing elements is movable along the longitudinal direction X, the movement of the pressure element 21 from the rest position to the compression position involves the compression of both sealing elements 22', 22".

The presence of multiple sealing elements 22 ensures greater versatility of the supply device 9, in order to be used for the electrochemical formation of batteries 2 of different models.

Of course, as a function of the specific needs, i.e. in particular as a function of the depth of the openings 4 on the cover 3 of the batteries 2 that must be formed in the plant 1, each supply device 9 can also comprise a greater number of sealing elements, separated from each other by spacer elements.

In order to facilitate the perimeter expansion of the sealing elements 22 when they are elastically deformed due to the action of the pressure element 21 arranged in the thrust position, a perimeter recess 28 is obtained, starting from the internal surface 27 of contact with the end portion 11 of the tubular body 10 of each of the sealing elements 22; such perimeter recess 28 substantially defines a weakening line of the sealing element 22 at which the sealing element 22 can be more easily deformed.

The presence of such perimeter recess 28 in each of the sealing elements 22 prevents the latter, when compressed via action of the pressure element 21, from being deformed in a different manner rather than being perimetrically expanded; for example, by overlapping with a flap portion thereof a portion of the pressure element 21, of the abutment element 20 or of the spacer element 26, in such case negatively affecting the correct operation of the device 9, i.e. in particular reducing its capacity to make a seal on the cover 3 of the battery 2.

Advantageously, each of the sealing elements 22 is made of a polymer and preferably elastomeric material, capable of resisting acidic substances, such as an EPDM rubber, since it can easily come into contact with the electrolyte solution made to circulate in the cell of the battery 3.

In accordance with the preferred embodiment illustrated in the enclosed figures, the lever 23 is rotatably engaged with the tubular body 10, and in particular with the grip portion 29 of the latter, by means of one or more pins 33 (preferably two opposing pins) and is provided with an operative portion 34, adapted to act on the pressure element 21 in order to retain it in the compression position, and with a non-operative portion 35, adapted to allow the pressure element 21 to remain in the rest position. The operative portion 34 and the non-operative portion 35 are connected by a cam portion 36 of the lever 23. The lever 23 can be moved in rotation around the pins 33 between an operative position (not illustrated) and a non-operative position (illustrated in Figures 3 and 4) by surmounting the cam portion 36.

In particular, in the operative position, the operative portion 34 of the lever 23 is interposed between the pin 33 and the pressure element 21 and acts on the latter in order to maintain it in the compression position. In the non-operative position, the non-operative portion 35 of the lever 23 is interposed between the pins 33 and the pressure element 21 and allows the latter to remain in the rest position.

Preferably, the lever 23 comprises two facing twin parts 37 connected by connector portions 38, such twin parts 37 constrained to the tubular body 10 in opposite positions, each by means of a corresponding pin of the pins 33. Each of the twin parts 37 comprises an operative wing and a non-operative wing. The operative wings of the two twin parts 37 together define the operative portion 34 of the lever 23 and the non-operative wings of the two twin parts 37 together define the non-operative portion 35 of the lever 23.

The pressure element 21 is advantageously provided with a flange 39 on two opposite portions, on which the two twin parts 37 of the lever 25 are adapted to operate.

In operation, in order to bring the sealing elements 22 to be perimetrically expanded, the lever 23 is manually moved in rotation around the pins 33 from the non-operative position to the operative position, by surmounting the cam portion 36. During the rotation of the lever 23, the pressure element 21 is thrust by the cam portion 36 of the latter to move away from the pins 33 and from the shoulder 30 of the tubular body 10 and move closer to the abutment element 20, consequently causing the compression of the sealing elements 22 and their perimeter expansion. The lever 23, once it has reached the operative position, with its operative portion 34 that maintains the pressure element 21 thrusted against the sealing elements 22, is retained in the aforesaid position by the cam portion 36 which prevents its return into the non-operative position.

The lever 23 is advantageously provided with one or more seats 40, each of which adapted to receive a corresponding pin of the pins 33 in order to be constrained to the tubular body 10. Each seat 40 is open on the upper part by means of an opening 41 delimited by opposing engagement appendages 42 of the lever 23. Each of the pins 33 is snap-insertable in the corresponding seat 40 of the lever 23 through the opening 41 via elastic deformation of the engagement appendages 42.

When the pins 33 are inserted in the corresponding seats 40, the engagement appendages 42 prevent the same from exiting from the seats 40 due only to the action of the weight force that acts on the lever 23. Nevertheless, it will suffice to exert a traction force on the lever 23 to cause an elastic deformation of the engagement appendages 42 and release the lever 23 from the tubular body 10 in a simple and quick manner.

Therefore, the fact that the seats 40 are open on the upper part allows constraining and releasing the lever 23 to and from the tubular body 10 in a quick and facilitated manner.

The tubular body 10 preferably comprises a first coupling duct 43, which is in direct hydraulic communication with the inlet duct 12 of the tubular body 10 and is susceptible to be connected to the feeding means 7 in order to receive the flow of electrolyte solution therefrom, and a second coupling duct 44, which is in hydraulic communication with the outlet duct 13 of the tubular body 10 and is susceptible to be connected to the return means 8 in order to transfer thereto the flow of electrolyte solution exiting from the cell. The first coupling duct 43 and the second coupling duct 44 are extended along substantially parallel directions, Z' and Z", having at least one component orthogonal to the longitudinal direction X of preferred extension of the tubular body 10. The lever 23 is constrained to the tubular body 10 in a manner so as to be movable in rotation on a plane substantially orthogonal to the components Y' and Y" of the directions Z and Z' orthogonal to the longitudinal direction X.

In such a manner, the presence of the first and second coupling duct on the tubular body 10 do not prevent the rotation of the lever 23 nor do they interfere with the hand of the operator that moves the lever 23 in rotation.

The supply device 9 preferably comprises a metering spout 45, which is traversed by the outlet duct 13, and a filter 46 mounted on the metering spout 45, adapted to filter possible impurities that have been collected from the electrolyte solution flows within the cells 2 during charging. The electrolyte solution is sucked into the outlet duct 13 through a mouth 49 of the outlet duct 13 provided for on the metering spout 45, which therefore defines the level of electrolyte solution contained in the corresponding cell.

In particular, the filter 46 is susceptible to be inserted on the metering spout 45 and for such purpose comprises a housing 47, adapted to receive the metering spout 45 with the mouth 49 of the outlet duct 13 placed in the housing 47, and at least two mouths 48 for the passage of the electrolyte solution communicating with the housing 47. Preferably, the filter 46 comprises four mouths 48 for the passage of the electrolyte solution.

The presence of the filter 46 ensures a continuous suction of the electrolyte solution into the outlet duct 13, even if an impurity present in the electrolyte solution is arranged in front of one of the passage mouths 48, preventing the suction of electrolyte solution through it.

In addition, the filter 46 facilitates the maintenance of the supply device 9, since the impurities that come to be arranged in front of one of the passage mouths 48 during the charging process can be easily identified and removed at the end of the process itself.

In addition, the passage mouths 48 are advantageously sized in order to ensure a total inlet section of the electrolyte solution (determined by the sum of the sections of the passage mouths 48) greater than the outflow section (determined by the section of the outlet duct 13), such that the speed of the electrolyte solution entering through the passage mouths 48 is reduced with respect to the speed that it would have without the presence of the filter 46. Given the low speed of the electrolyte solution entering into the filter 46, the probability that an impurity is sucked with force into one of the passage mouths 48, obstructing it, is considerably reduced.

Advantageously, the filter 46 is inserted under pressure on the metering spout 45.

Also forming an object of the present invention is a device for supplying an electrolyte solution to a cell of a battery for a plant for the electrochemical formation of batteries in particular of the above-described type; the same reference numbers are maintained hereinbelow.

The supply device 9, as specified above, is susceptible to be removably and sealingly mounted on the cover 3 of a battery 2 at a provided opening 4 of the cover 3 and to be connected to the feeding means 7 and to return means 8 of the plant 1 for the electrochemical formation of batteries. The supply device 9 is adapted to receive from the feeding means 7 a flow of the electrolyte solution and to convey it into a corresponding cell of the battery, and it is adapted to transfer to the return means 8 the flow of electrolyte solution drawn from the cell.

As described above, the supply device comprises a tubular body 10, having preferred extension along a longitudinal direction X and comprising an end portion 11 adapted to be at least partially removably inserted in an opening 4 of the cover 3 of a battery 2. The tubular body 10 also comprises an inlet duct 12, susceptible to be connected to the feeding means 7 in order to receive from the latter the aforesaid electrolyte solution flow and to convey it into the corresponding cell, and an outlet duct 13 connected to the return means 8 for the extraction of the electrolyte solution flow from the cell.

The device 9 further comprises an abutment element 20, a pressure element 21, one or more sealing elements 22 and a lever 23 mounted on its end portion 11.

The abutment element 20 is fixed to the end portion 11 of the tubular body 10 and has an annular abutment face 24, which is extended around the end portion 11 with at least one component thereof substantially perpendicular to the longitudinal direction X.

The pressure element 21 is mounted on the end portion 11 of the tubular body 10 and has an annular pressure face 25, which faces the abutment face 24 of the abutment element 20 and is extended around the end portion 11 with at least one component thereof substantially perpendicular to the longitudinal direction X.

The elastically deformable sealing element 22 is perimetrically mounted on the end portion 11 of the tubular body 10, interposed between the annular abutment face 24 and the annular pressure face 25.

The pressure element 21 is movable with respect to the tubular body 10 along the longitudinal direction X between a compression position, in which it is brought close to the abutment element 20 and causes the compression of the sealing element 22, or of the sealing elements 22, along the longitudinal direction X and its perimeter expansion via elastic deformation, and a rest position in which it is spaced from the abutment element 20.

The lever 23 is constrained to the tubular body 10 and can be actuated to act on the pressure element 21 in order to move it between the rest position and the compression position.

The sealing element 22, elastically deformed due to the action of the pressure element 21 arranged in the compression position, is susceptible to obtain a sealing between the tubular body 10 and the cover 3 of one of the batteries when the end portion 11 of the tubular body 10 is inserted in an opening 4 of the cover 3.

The finding thus conceived therefore attains the pre-established objects.

## Claims

1. Device for supplying an electrolytic solution to a cell of a battery for a plant for the electrochemical formation of batteries, said supply device (9) being susceptible to be removably and sealingly mounted on the cover (3) of a battery (2) at a provided opening (4) of said cover (3) and connected to feeding means (7) and to return means (8) of said plant (1) for the electrochemical formation, **characterized in that** it comprises:
- a tubular body (10), having preferred extension along a longitudinal direction (X) and comprising one end portion (11) adapted to be at least partially removably inserted in said opening (4) of the cover (3) of said battery (2), said tubular body (10) also comprising at least one inlet duct (12) susceptible to be connected to said feeding means (7) in order to receive an electrolytic solution flow from the latter and convey it into a corresponding cell of said battery (2), and an outlet duct (13) susceptible to be connected to said return means (8) for the extraction of said electrolytic solution flow from said cell;
- an abutment element (20) fixed to the end portion (11) of said tubular body (10) and having an annular abutment face (24) being extended around said end portion (11) with at least one component thereof substantially perpendicular to said longitudinal direction (X);
- a pressure element (21) mounted on the end portion (11) of said tubular body (10), and having an annular pressure face (25) facing the abutment face (24) of said abutment element (20) and being extended around said end portion (11) with at least one component thereof substantially perpendicular to said longitudinal direction (X);
- at least one elastically deformable sealing element (22), which is perimetrically mounted on the end portion (11) of said tubular body (10), interposed between said annular abutment face (24) and said annular pressure face (25);
said pressure element (21) being movable with respect to said tubular body (10) along said longitudinal direction (X) between a compression position, in which it is brought close to said abutment element (20) and causes the compression of said at least one sealing element (22) along said longitudinal direction (X) and the perimeter expansion thereof via elastic deformation, and a rest position in which it is spaced from said abutment element (20);
- a lever (23) constrained to said tubular body (10) and actuatable to act on said pressure element (21) in order to move it between said rest position and said compression position;
said at least one sealing element (22), elastically deformed due to the action of said pressure element (21) arranged in said compression position, being susceptible to make a seal between said tubular body (10) and the cover (3) of said battery (2) when the end portion (11) of said tubular body (10) is inserted in an opening (4) of said cover (3).

2. Plant for the electrochemical formation of batteries, of the type each provided with a rigid container containing at least one cell and closed on the upper part by a cover (3) provided with at least one opening (4) in communication with said cell, said plant (1) comprising:
- means (7) for feeding an electrolytic solution to battery cells (2);
- return means (8) for extracting said electrolytic solution from said cells;
**characterized in that** it comprises a plurality of devices (9) according to claim 1, for supplying said electrolytic solution to the cells of said batteries (2), each device (9) susceptible to being removably and sealingly mounted on the cover (3) of one of said batteries (2) at one of said openings (4) and connected to said feeding means (7), in order to receive an electrolytic solution flow from the latter and convey it into a corresponding cell, and to said return means (8) in order to extract said flow from said cell;
each of said supply devices (9) being provided with:
- said tubular body (10), having preferred extension along a longitudinal direction (X) and comprising said end portion (11) adapted to be at least partially removably inserted in an opening (4) of the cover (3) of one of said batteries (2), said tubular body (10) also comprising said at least one inlet duct (12), connected to said feeding means (7) in order to receive said electrolytic solution flow from the latter and convey it into the corresponding cell, and said outlet duct (13) connected to said return means (8) for the extraction of said electrolytic solution flow from said cell;
- said abutment element (20) fixed to the end portion (11) of said tubular body (10) and having said annular abutment face (24) being externally extended around said end portion (11);
- said pressure element (21) mounted on the end portion (11) of said tubular body (10), and having said annular pressure face (25) facing the abutment face (24) of said abutment element (20) and being externally extended around said end portion (11);
- said at least one elastically deformable sealing element (22), which is perimetrically mounted on the end portion (11) of said tubular body (10), interposed between said annular abutment face (24) and said annular pressure face (25);
said pressure element (21) being movable with respect to said tubular body (10) along said longitudinal direction (X) between a compression position, in which it is brought close to said abutment element (20) and causes the compression of said at least one sealing element (22) along said longitudinal direction (X) and the perimeter expansion thereof via elastic deformation, and a rest position in which it is spaced from said abutment element (20);
- said lever (23) mechanically constrained to said tubular body (10) and actuatable to act on said pressure element (21) in order to move it between said rest position and said compression position;
said at least one sealing element (22) being elastically deformed due to the action of said pressure element (21) in said compression position and being susceptible to make a seal between said tubular body (10) and the cover (3) of one of said batteries (2) when the end portion (11) of said tubular body (10) is inserted in an opening (4) of said cover (3).

3. Plant for the electrochemical formation of batteries according to claim 2, **characterized in that** said at least one sealing element (22) is provided with an internal surface (27) of contact with the end portion (11) of said tubular body (10) and a perimeter recess (28) obtained starting from said internal surface (27) and adapted to facilitate the perimeter expansion of said at least one sealing element (22) when elastically deformed due to the action of said pressure element (21) arranged in said thrust position.

4. Plant for the electrochemical formation of batteries according to any one of the preceding claims, **characterized in that** each of said supply devices (9) comprises at least two elastically deformable sealing elements (22) mounted on the end portion (11) of said tubular body (10) and also comprises at least one spacer element (26) mounted on the end portion (11) of said tubular body (10) interposed between said at least two sealing elements (22) and movable with respect to said tubular body (10) along said longitudinal direction (X).

5. Plant for the electrochemical formation of batteries according to any one of the preceding claims, **characterized in that** said at least one sealing element (22) is made of a polymer material that is resistant to acidic substances.

6. Plant for the electrochemical formation of batteries according to any one of the preceding claims, **characterized in that** said lever (23) is rotatably engaged to said tubular body (10) by means of at least one pin (33) and is provided with an operative portion (34), adapted to act on said pressure element (21) in order to retain it in said compression position, and a non-operative portion (35), adapted to allow said pressure element (21) to remain in said rest position, and with a cam portion (36) which separates said operative portion (34) and said non-operative portion (35) from each other, said lever (23) being movable in rotation around said at least one pin (33), going beyond said cam portion (36), between:
- an operative position, in which said operative portion (34) is interposed between said pin (33) and said pressure element (21) and acts on the latter in order to maintain it in said compression position; and
- a non-operative position, in which said non-operative portion (35) is interposed between said pin (33) and said pressure element (21) and allows the latter to remain in said rest position.

7. Plant for the electrochemical formation of batteries according to claim 6, **characterized in that** said lever (23) is provided with at least one seat (40), which is adapted to receive said at least one pin (33) and on the upper part is open by means of an opening (41) delimited by opposing engagement appendages (42) of said lever (23), said at least one pin (33) being snap-insertable in the at least one seat (40) of said lever (23) through said opening (41) via elastic deformation of said engagement appendages (42).

8. Plant for the electrochemical formation of batteries according to any one of the preceding claims, **characterized in that** said abutment element (20) is defined by a ring nut susceptible to being screwed to a threaded terminal section (32) of the end portion (11) of said tubular body (10).

9. Plant for the electrochemical formation of batteries according to any one of the preceding claims, **characterized in that** said tubular body (10) comprises at least one first coupling duct (43), which is in hydraulic communication with said at least one inlet duct (12) and is susceptible to be connected to said feeding means (7) in order to receive said electrolytic solution flow from the latter, and at least one second coupling duct (44), which is in hydraulic communication with said outlet duct (13) and is susceptible to be connected to said return means (8) in order to transfer to the latter said electrolytic solution flow exiting from said cell, said first coupling duct (43) and said second coupling duct (44) being extended along substantially parallel directions (Z' and Z") having at least one component orthogonal to the preferred longitudinal extension direction (X) of said tubular body (10) and said lever (23) being constrained to said tubular body (10) in a manner such that it can be moved in rotation on a plane substantially orthogonal to the components (Y',Y") of the directions (Z', Z") orthogonal to said longitudinal direction (X).

10. Plant for the electrochemical formation of batteries according to any one of the preceding claims, **characterized in that** said supply device (9) comprises a metering spout (45) and a filter (46) mounted on said metering spout (45).

11. Plant for the electrochemical formation of batteries according to claim 10, **characterized in that** said filter (46) is susceptible to be inserted on said metering spout (45) and comprises a housing (47) for such purpose, adapted to receive said metering spout (45), and at least two inlet mouths (48) for said electrolytic solution communicating with said housing (47).

## Patentansprüche

1. Einrichtung zur elektrochemischen Herstellung von Batterien und Vorrichtung zur Lieferung einer Elektrolytlösung zu einer Zelle einer Batterie für diese Anlage, wobei die genannte Vorrichtung zur Lieferung (9) geeignet ist, zur elektrochemischen Herstellung entfernbar und abdichten auf der Abdeckung (3) einer Batterie (2) auf einer vorgesehenen Öffnung (4) der genannten Abdeckung (3) montiert und an Versorgungselemente (7) und Rückleitungselemente (8) der genannten Anlage (1) angeschlossen zu werden, **dadurch gekennzeichnet, dass** sie Folgendes umfasst:
- einen Rohrkörper (10) mit einem bevorzugten Verlauf entlang einer Längsrichtung (X) und umfassend einen Endabschnitt (11), der geeignet ist, wenigstens teilweise entfernbar in die genannte Öffnung (4) der Abdeckung (3) der genannten Batterie (2) eingesetzt zu werden, wobei der genannte Rohrkörper (10) außerdem mindestens eine Eingangsleitung (12) umfasst, die geeignet ist, an die genannten Versorgungselemente (7) angeschlossen zu werden, um von Letzteren einen Elektrolytlösungsfluss zu erhalten und diesen in eine entsprechende Zelle der genannten Batterie (2) zu leiten, und eine Ausgangsleitung (13), die geeignet ist, an die genannten Rückleitungselemente (8) zum Ableiten des genannten Elektrolytlösungsflusses aus der genannten Zelle angeschlossen zu werden;
- ein an dem Endabschnitt (11) des genannten Rohrkörpers (10) befestigtes Anschlagselement (20) mit einer ringförmigen Anschlagfläche (24), das um den genannten Endabschnitt (11) herum verläuft und mindestens eine im Wesentlichen zu der genannten Längsrichtung (X) senkrechte Komponente umfasst;
- ein an dem Endabschnitt (11) des genannten Rohrkörpers (10) montiertes Druckelement (21) mit einer ringförmigen Druckfläche (25), das der Anschlagfläche (24) des genannten Anschlagselements (20) gegenüberliegt und mit mindestens einer im Wesentlichen zu der genannten Längsrichtung (X) senkrechten Komponente um den genannten Endabschnitt (11) herum verläuft;
- mindestens ein elastisch verformbares Dichtungselement (22), das auf dem Umfang des Endabschnitts (11) des genannten Rohrkörpers (10) montiert und zwischen der genannten ringförmigen Anschlagfläche (24) und der genannten ringförmigen Druckfläche (25) eingesetzt ist;
wobei das genannte Druckelement (21) im Verhältnis zu dem genannten Rohrkörper (10) entlang der genannten Längsrichtung (X) zwischen einer Druckposition, in der es an das genannte Anschlagelement (20) angenähert ist und eine Kompression des genannten mindestens einen Dichtungselements (22) entlang der genannten Längsrichtung(X) und seiner umlaufenden Ausdehnung durch elastische Verformung herbeiführt, und einer Ruheposition, in der es von dem genannten Anschlagselement (20) entfernt ist, beweglich ist;
- einen mit dem genannten Rohrkörper (10) verbundenen Hebel (23), der betätigt werden kann, um auf das genannte Druckelement (21) zu wirken und es zwischen der genannten Ruheposition und der genannten Kompressionsposition zu bewegen;
wobei das genannte mindestens eine, elastisch durch Wirkung des genannten Druckelements (21) verformte und in der genannten Kompressionsposition angeordnete Dichtungselement (22) geeignet ist, eine Abdichtung zwischen dem genannten Rohrkörper (10) und der Abdeckung (3) der genannten Batterie (2) zu realisieren, wenn der Endabschnitt (11) des genannten Rohrkörpers (10) in eine Öffnung (4) der genannten Abdeckung (3) eingesetzt ist.

2. Anlage zur elektrochemischen Bildung von Batterien des Typs, bei dem jede mit einem steifen, mindestens eine Zelle enthaltenden und oben durch eine Abdeckung (3) geschlossenen Behälter ausgestattet ist, der mindestens mit einer mit der genannten Zelle verbundenen Öffnung (4) ausgestattet ist, wobei die genannte Anlage (1) Folgendes umfasst:
- Elemente zur Versorgung (7) mit einer Elektrolytlösung an Batteriezellen (2);
- Rückleitungselemente (8) zum Ableiten der Elektrolytlösung aus den genannten Zellen;
**dadurch gekennzeichnet, dass** sie eine Vielzahl an Vorrichtungen (9) zur Lieferung der genannten Elektrolytlösung zu den genannten Batteriezellen (2) nach Anspruch 1 umfasst, bei der jede Vorrichtung (9) geeignet ist, beweglich abdichtend auf der Abdeckung (3) einer der genannten Batterien (2) auf einer der genannten Öffnungen (4) montiert und an die genannten Versorgungselemente (7) angeschlossen zu werden, um von diesen Letzteren einen Elektrolytlösungsfluss zu erhalten und diesen in eine entsprechende Zelle zu leiten und an die genannten Rückkehrelemente (8), um den genannten Fluss aus der genannten Zelle abzuleiten;
wobei jede der genannten Lieferungsvorrichtungen (9) mit Folgendem ausgestattet ist:
- dem genannten Rohrkörper (10) mit einem bevorzugten Verlauf entlang einer Längsrichtung (X) und umfassend den genannten Endabschnitt (11), der geeignet ist, wenigstens teilweise entfernbar in die genannte Öffnung (4) der Abdeckung (3) einer der genannten Batterien (2) eingesetzt zu werden, wobei der genannte Rohrkörper (10) außerdem mindestens die genannte eine Eingangsleitung (12) umfasst, die an die genannten Versorgungselemente (7) angeschlossen ist, um von Letzteren einen Elektrolytlösungsfluss zu erhalten und diesen in die entsprechende Zelle zu leiten, und die genannte Ausgangsleitung (13), die an die genannten Rückleitungselemente (8) angeschlossen ist, um den genannten Elektrolytlösungsfluss aus der genannten Zelle abzuleiten;
- das genannte an dem Endabschnitt (11) des genannten Rohrkörpers (10) befestigte Anschlagselement (20) mit der genannten ringförmigen Anschlagfläche (24), die außen um den genannten Endabschnitt (11) verläuft;
- das an dem Endabschnitt (11) des genannten Rohrkörpers (10) montierte genannte Druckelement (21) mit der genannten ringförmigen Druckfläche (25) gegenüber der Anschlagfläche (24) des genannten Anschlagselements (20), das außen um den genannten Endabschnitt (11) verläuft;
- das genannte mindestens eine elastisch verformbare Dichtungselement (22), das auf dem Umfang des Endabschnitts (11) des genannten Rohrkörpers (10) montiert ist und zwischen der genannten ringförmigen Anschlagfläche (24) und der genannten ringförmigen Druckfläche (25) eingesetzt ist;
wobei das genannte Druckelement (21) im Verhältnis zu dem genannten Rohrkörper (10) entlang der genannten Längsrichtung (X) zwischen einer Druckposition, in der es an das genannte Anschlagelement (20) angenähert ist und eine Kompression des genannten mindestens einen Dichtungselements (22) entlang der genannten Längsrichtung(X) und seiner umlaufenden Ausdehnung durch elastische Verformung herbeiführt, und einer Ruheposition, in der es von dem genannten Anschlagselement (20) entfernt ist, beweglich ist;
- den genannten mechanisch mit dem genannten Rohrkörper (10) verbundenen Hebel (23), der betätigt werden kann, um auf das genannte Druckelement (21) zu wirken und es zwischen der genannten Ruheposition und der genannten Kompressionsposition zu bewegen;
wobei das genannte mindestens Dichtungselement (22) sich elastisch durch Wirkung des genannten Druckelements (21) in der genannten Kompressionsposition verformt und geeignet ist, eine Abdichtung zwischen dem genannten Rohrkörper (10) und der Abdeckung (3) einer der genannten Batterien (2) zu realisieren, wenn der Endabschnitt (11) des genannten Rohrkörpers (10) in eine Öffnung (4) der genannten Abdeckung (3) eingesetzt ist.

3. Anlage zur elektrochemischen Bildung von Batterien nach Anspruch 2, **dadurch gekennzeichnet, dass** das genannte mindestens eine Dichtungselement (22) mit einer Innenfläche (27) des Kontakts mit dem Endabschnitt (11) des genannten Rohrkörpers (10) und einer umlaufenden Vertiefung (28) ausgehend von der genannten Innenfläche (27) ausgestattet und geeignet ist, die Umfangsausdehnung des genannten mindestens einen Dichtungselements (22) zu begünstigen, wenn dieses durch Wirkung des genannten, in der genannten Druckposition angeordneten Druckelements (21) elastisch verformt ist.

4. Anlage zur elektrochemischen Bildung von Batterien nach einem beliebigen der vorangegangenen Ansprüche, **dadurch gekennzeichnet, dass** jedes der genannten Vorrichtungen (9) zur Lieferung mindestens zwei elastisch verformbare und auf dem Endabschnitt (11) des genannten Rohrkörpers (10) montierte Dichtungselemente (22) und außerdem mindestens ein auf dem Endabschnitt (11) des genannten Rohrkörpers (10) montiertes und zwischen den mindestens zwei Dichtungselementen (22) eingesetztes Distanzelement (26) umfasst, das im Verhältnis zu dem genannten Rohrkörper (10) entlang der genannten Verlaufsrichtung (X) bewegt werden kann.

5. Anlage zur elektrochemischen Bildung von Batterien nach einem beliebigen der vorangegangenen Ansprüche, **dadurch gekennzeichnet, dass** das genannte mindestens eine Dichtungselement (22) aus gegenüber sauren Substanzen beständigem Polymerwerkstoff hergestellt ist.

6. Anlage zur elektrochemischen Bildung von Batterien nach einem beliebigen der vorangegangenen Ansprüche, **dadurch gekennzeichnet, dass** der genannte Hebel (23) mittels mindestens einem Zapfen (33) drehbar mit dem genannten Rohrkörper (10) verbunden und mit einem operativen Abschnitt (34) ausgestattet ist, der geeignet ist, auf das genannte Druckelement (21) zu wirken, um es in der genannten Druckposition zu halten, mit einem nicht operativen Abschnitt (35), der geeignet ist, es dem genannten Druckelement (21) zu gestatten, in der genannten Ruheposition zu verbleiben und mit einem Nockenabschnitt (36), der den genannten operativen Abschnitt (34) und den genannten nicht operativen Abschnitt (35) voneinander trennt, wobei der genannte Hebel (23) drehbar um den genannten mindestens einen Zapfen (33) über den genannten Nockenabschnitt (36) hinaus beweglich ist, zwischen:
- einer operativen Position, in der der genannte operative Abschnitt (34) sich zwischen dem genannten Zapfen (33) und dem genannten Druckelement (21) befindet und auf Letzteres wirkt, um es in der genannten Druckposition zu halten; und
- einer nicht operativen Position, in der der genannte nicht operative Abschnitt (35) sich zwischen dem genannten Zapfen (33) und dem genannten Druckelement (21) befindet und es Letzteres gestattet, in der genannten Ruheposition zu bleiben.

7. Anlage zur elektrochemischen Bildung von Batterien nach Anspruch 6, **dadurch gekennzeichnet, dass** der genannte Hebel (23) mit mindestens einem Sitz (40) ausgestattet ist, der geeignet ist, den genannten mindestens einen Zapfen (33) aufzunehmen und oben durch eine von dem genannten Hebel (23) gegenüberliegenden Verbindungzusätzen (42) begrenzte Öffnung (41) geöffnet ist, wobei der genannte mindestens eine Zapfen (33) einrastend in den mindestens einen Sitz (40) des genannten Hebels (23) über die genannte Öffnung (41) durch elastische Verformung der genannten Verbindungszusätze (42) eingesetzt werden kann.

8. Anlage zur elektrochemischen Bildung von Batterien nach einem beliebigen der vorangegangenen Ansprüche, **dadurch gekennzeichnet, dass** das genannte Anschlagselement (20) von einem Stellring definiert wird, der geeignet ist, an einem Endabschnitt mit Gewinde (32) des Endabschnitts (11) des genannten Rohrkörpers (10) verschraubt zu werden.

9. Anlage zur elektrochemischen Bildung von Batterien nach einem beliebigen der vorangegangenen Ansprüche, **dadurch gekennzeichnet, dass** der genannte Rohrköper (10) mindestens eine erste Verbindungsleitung (43) umfasst, die hydraulisch mit der genannten mindestens einen Eingangsleitung (12) verbunden und geeignet ist, an die genannten Versorgungselemente (7) angeschlossen zu werden, um von Letzteren den genannten Elektrolytfluss zu erhalten, und mit mindestens einer zweiten Verbindungsleitung (44), die hydraulisch mit der genannten Ausgangsleitung (13) verbunden und geeignet ist, an die genannten Rückleitungselemente (8) angeschlossen zu werden, um an diesen den genannten Elektrolytlösungsfluss im Ausgang aus der Zelle abzugeben, wobei die genannte erste Verbindungsleitung (43) und die genannte zweite Verbindungsleitung (44) entlang im Wesentlichen parallelen Richtungen (Z' und Z") verlaufen und mindestens eine zu der bevorzugten Verlaufsrichtung (X) des genannten Rohrkörpers (10) rechtwinklige Komponente aufweisen und der genannte Hebel (23) mit dem genannten Rohrkörper (10) so verbunden ist, dass er in einer im Wesentlichen zu den Komponenten (Y',Y") zu der genannten Längsrichtung (X) rechtwinkligen Richtungen (Z', Z") rechtwinkligen Ebene beweglich drehbar ist.

10. Anlage zur elektrochemischen Bildung von Batterien nach einem beliebigen der vorangegangenen Ansprüche, **dadurch gekennzeichnet, dass** die genannte Vorrichtung zur Lieferung (9) eine Dosiermündung (45) und einen auf dieser Dosiermündung (45) montierten Filter (46) umfasst.

11. Anlage zur elektrochemischen Bildung von Batterien nach Anspruch 10, **dadurch gekennzeichnet, dass** der genannte Filter (46) geeignet ist, auf die genannte Dosiermündung (45) gesetzt zu werden und zu diesem Zwecke eine Unterbringung (47) umfasst, die geeignet ist, die genannte Dosiermündung (45) aufzunehmen und mindestens zwei mit der genannten Unterbringung (47) verbundene Öffnungen (48) des Eingangs der genannten Elektrolytflüssigkeit.

## Revendications

1. Dispositif pour alimenter une solution d'électrolyte pour une cellule d'une batterie d'une installation pour la formation électrochimique de batteries, ledit dispositif d'alimentation (9) étant susceptible d'être amoviblement monté de manière étanche sur le couvercle (3) d'une batterie (2) au niveau d'une ouverture (4) prévue dudit couvercle (3) et raccordé à des moyens d'alimentation (7) et à des moyens de retour (8) de ladite installation (1) pour la formation électrochimique, **caractérisé en ce qu'**il comprend :
- un corps tubulaire (10), ayant un développement préférentiel le long d'une direction longitudinale (X) et comprenant une portion d'extrémité (11) destinée à être au moins en partie insérée amoviblement dans ladite ouverture (4) du couvercle (3) de ladite batterie (2), ledit corps tubulaire (10) comprenant en outre au moins un conduit d'entrée (12) susceptible d'être raccordé auxdits moyens d'alimentation (7) pour recevoir de ces derniers un flux de solution d'électrolyte et l'acheminer dans une cellule correspondante de ladite batterie (2), et un conduit de sortie (13) susceptible d'être raccordé auxdits moyens de retour (8) pour l'extraction dudit flux de solution d'électrolyte de ladite cellule ;
- un élément de correspondance (20) fixé à la portion d'extrémité (11) dudit corps tubulaire (10) et ayant une face de correspondance annulaire (24) se développant autour de ladite portion d'extrémité (11) avec au moins une de ses composantes essentiellement perpendiculaire à ladite direction longitudinale (X) ;
- un élément presseur (21) monté sur la portion d'extrémité (11) dudit corps tubulaire (10), et ayant une face de pression annulaire (25) placée en face de la face de correspondance (24) dudit élément de correspondance (20) et se développant autour de ladite portion d'extrémité (11) avec au moins l'une de ses composantes essentiellement perpendiculaire à ladite direction longitudinale (X) ;
- au moins un élément d'étanchéité (22) élastiquement déformable, qui est monté périmétriquement sur la portion d'extrémité (11) dudit corps tubulaire (10), interposé entre ladite face de correspondance annulaire (24) et ladite face de pression annulaire (25) ;
ledit élément presseur (21) pouvant être mis en mouvement par rapport audit corps tubulaire (10) le long de ladite direction longitudinale (X) entre une position de compression, où il se rapproche dudit élément de correspondance (20) et provoque la compression dudit au moins un élément d'étanchéité (22) le long de ladite direction longitudinale (X) et son expansion périmétrique par déformation élastique, et une position de repos où il est espacé dudit élément de correspondance (20) ;
- un levier (23) relié audit corps tubulaire (10) et actionnable pour agir sur ledit élément presseur (21) afin de le déplacer entre ladite position de repos et ladite position de compression ;
ledit au moins un élément d'étanchéité (22), déformé élastiquement par l'action dudit élément presseur (21) disposé dans ladite position de compression, étant susceptible de réaliser une étanchéité entre ledit corps tubulaire (10) et le couvercle (3) de ladite batterie (2) quand la portion d'extrémité (11) dudit corps tubulaire (10) est insérée dans une ouverture (4) dudit couvercle (3).

2. Installation pour la formation électrochimique de batteries, du type munies chacune d'un boîtier rigide contenant au moins une cellule et fermé dans la partie supérieure par un couvercle (3) doté d'au moins une ouverture (4) en communication avec ladite cellule, ladite installation (1) comprenant :
- des moyens d'alimentation (7) d'une solution d'électrolyte pour des cellules de batteries (2) ;
- des moyens de retour (8) pour extraire ladite solution d'électrolyte desdites cellules ;
**caractérisée en ce qu'**elle comprend une pluralité de dispositifs (9) selon la revendication 1, pour alimenter ladite solution d'électrolyte pour les cellules desdites batteries (2), chaque dispositif (9) étant susceptible d'être amoviblement monté de manière étanche sur le couvercle (3) d'une desdites batteries (2) au niveau d'une desdites ouvertures (4) et raccordé auxdits moyens d'alimentation (7), pour recevoir de ces derniers un flux de solution d'électrolyte et l'acheminer dans une cellule correspondante, et auxdits moyens de retour (8) pour extraire ledit flux de ladite cellule ;
chacun desdits dispositifs d'alimentation (9) étant muni°:
- dudit corps tubulaire (10), ayant un développement préférentiel le long d'une direction longitudinale (X) et comprenant ladite portion d'extrémité (11) destinée à être au moins en partie insérée amoviblement dans une ouverture (4) du couvercle (3) d'une desdites batteries (2), ledit corps tubulaire (10) comprenant également ledit au moins un conduit d'entrée (12), raccordé auxdits moyens d'alimentation (7) pour recevoir de ces derniers ledit flux de solution d'électrolyte et l'acheminer dans la cellule correspondante, et ledit conduit de sortie (13) raccordé auxdits moyens de retour (8) pour l'extraction dudit flux de solution d'électrolyte de ladite cellule ;
- dudit élément de correspondance (20) fixé à la portion d'extrémité (11) dudit corps tubulaire (10) et ayant ladite face de correspondance annulaire (24) se développant extérieurement autour de ladite portion d'extrémité (11) ;
- dudit élément presseur (21) monté sur ladite portion d'extrémité (11) dudit corps tubulaire (10), et ayant ladite face de pression annulaire (25) placée en face de la face de correspondance (24) dudit élément de correspondance (20) et se développant extérieurement autour de ladite portion d'extrémité (11) ;
- dudit au moins un élément d'étanchéité (22) élastiquement déformable, qui est monté périmétriquement sur la portion d'extrémité (11) dudit corps tubulaire (10), interposé entre ladite face de correspondance annulaire (24) et ladite face de pression annulaire (25) ;
ledit élément presseur (21) pouvant être mis en mouvement par rapport audit corps tubulaire (10) le long de ladite direction longitudinale (X) entre une position de compression, où il se rapproche dudit élément de correspondance (20) et provoque la compression dudit au moins un élément d'étanchéité (22) le long de ladite direction longitudinale (X) et son expansion périmétrique par déformation élastique, et une position de repos où il est espacé dudit élément de correspondance (20) ;
- dudit levier (23) relié mécaniquement audit corps tubulaire (10) et actionnable pour agir sur ledit élément presseur (21) pour le déplacer entre ladite position de repos et ladite position de compression ;
ledit au moins un élément d'étanchéité (22) se déformant élastiquement par l'action dudit élément presseur (21) dans ladite position de compression et étant susceptible de réaliser une étanchéité entre ledit corps tubulaire (10) et le couvercle (3) d'une desdites batteries (2) quand la portion d'extrémité (11) dudit corps tubulaire (10) est insérée dans une ouverture (4) dudit couvercle (3).

3. Installation pour la formation électrochimique de batteries selon la revendication 2, **caractérisée en ce que** ledit au moins un élément d'étanchéité (22) est muni d'une surface intérieure (27) de contact avec la portion d'extrémité (11) dudit corps tubulaire (10) et d'une cavité périmétrique (28) réalisée à partir de ladite surface intérieure (27) et destinée à favoriser l'expansion périmétrique dudit au moins un élément d'étanchéité (22) quand celui-ci est déformé élastiquement par l'action dudit élément presseur (21) disposé dans ladite position de poussée.

4. Installation pour la formation électrochimique de batteries selon l'une des revendications précédentes, **caractérisée en ce que** chacun desdits dispositifs d'alimentation (9) comprend au moins deux éléments d'étanchéité (22) élastiquement déformables montés sur la portion d'extrémité (11) dudit corps tubulaire (10), et comprend également au moins un élément d'espacement (26) monté sur la portion d'extrémité (11) dudit corps tubulaire (10) interposé entre lesdits au moins deux éléments d'étanchéité (22) et pouvant être mis en mouvement par rapport audit corps tubulaire (10) le long de ladite direction longitudinale (X).

5. Installation pour la formation électrochimique de batteries selon l'une des revendications précédentes, **caractérisée en ce que** ledit au moins un élément d'étanchéité (22) est réalisé dans un matériau polymère résistant aux substances acides.

6. Installation pour la formation électrochimique de batteries selon l'une des revendications précédentes, **caractérisée en ce que** ledit levier (23) est engagé par pivotement sur ledit corps tubulaire (10) au moyen d'au moins un axe (33) et muni d'une portion opérationnelle (34), destinée à agir sur ledit élément presseur (21) pour le retenir dans ladite position de compression, d'une portion non opérationnelle (35), destinée à permettre audit élément presseur (21) de rester dans ladite position de repos, et d'une portion à came (36) qui sépare ladite portion opérationnelle (34) de ladite portion non opérationnelle (35), ledit levier (23) étant mis en rotation autour dudit au moins un axe (33), dépassant ladite portion à came (36), entre :
- une position opérationnelle, où ladite portion opérationnelle (34) est interposée entre ledit axe (33) et ledit élément presseur (21) et agit sur ce dernier pour le maintenir dans ladite position de compression ; et
- une position non opérationnelle, où ladite portion non opérationnelle (35) est interposée entre ledit axe (33) et ledit élément presseur (21) et permet à ce dernier de rester dans ladite position de repos.

7. Installation pour la formation électrochimique de batteries selon la revendication 6, **caractérisée en ce que** ledit levier (23) est muni d'au moins un logement (40), destiné à accueillir ledit au moins un axe (33) et qui est ouvert dans la partie supérieure à travers une ouverture (41) délimitée par des appendices d'engagement (42) placés à l'opposé dudit levier (23), ledit au moins axe (33) pouvant être inséré par enclenchement dans au moins un logement (40) dudit levier (23) à travers ladite ouverture (41) par déformation élastique desdits appendices d'engagement (42).

8. Installation pour la formation électrochimique de batteries selon l'une des revendications précédentes, **caractérisée en ce que** ledit élément de correspondance (20) est défini par une bague susceptible d'être vissée à une partie terminale filetée (32) de la portion d'extrémité (11) dudit corps tubulaire (10).

9. Installation pour la formation électrochimique de batteries selon l'une des revendications précédentes, **caractérisée en ce que** ledit corps tubulaire (10) comprend au moins un premier conduit de raccordement (43), qui est en communication hydraulique avec ledit au moins un conduit d'entrée (12) et qui est susceptible d'être raccordé auxdits moyens d'alimentation (7) pour recevoir de ces derniers ledit flux de solution d'électrolyte, et au moins un second conduit de raccordement (44), qui est en communication hydraulique avec ledit conduit de sortie (13) et qui est susceptible d'être raccordé auxdits moyens de retour (8) pour céder à ces derniers ledit flux de solution d'électrolyte en sortie de ladite cellule, ledit premier conduit de raccordement (43) et ledit second conduit de raccordement (44) se développant le long de directions essentiellement parallèles (Z' et Z") ayant au moins une composante orthogonale à la direction longitudinale (X) de développement préférentiel dudit corps tubulaire (10) et ledit levier (23) étant relié audit corps tubulaire (10) de manière à pouvoir être mis en mouvement par rotation sur un plan essentiellement orthogonal aux composantes (Y',Y") des directions (Z', Z") orthogonales à ladite direction longitudinale (X).

10. Installation pour la formation électrochimique de batteries selon l'une des revendications précédentes, **caractérisée en ce que** ledit dispositif d'alimentation (9) comprend un bec de dosage (45) et un filtre (46) monté sur ledit bec de dosage (45).

11. Installation pour la formation électrochimique de batteries selon la revendication 10, **caractérisée en ce que** ledit filtre (46) est susceptible d'être enfilé sur ledit bec de dosage (45) et il comprend à cet effet un logement (47), destiné à recevoir ledit bec de dosage (45), et au moins deux bouches d'entrée (48) de ladite solution d'électrolyte communiquant avec ledit logement (47).
